# EUROPÄISCHE PATENTSCHRIFT

(11) **EP 2 083 483 B1**
(45) Veröffentlichungstag und Bekanntmachung des Hinweises auf die Patenterteilung: **08.01.2014**
(21) Anmeldenummer: 08020130.4
(22) Anmeldetag: 19.11.2008
(51) Int. Cl.: H01R 9/03, H01R 13/24, H04Q 1/14

(54) **HVt-Stecker**
HVt plug
Prise HVT

(30) Priorität: 14.12.2007 DE 202007017624 U
(43) Veröffentlichungstag der Anmeldung: 29.07.2009
(73) Patentinhaber: CCS Technology, Inc., Wilmington, DE 19803 (US)
(72) Erfinder: Breuer-Heckel, Mike, 44143 Dortmund (DE); Badura, Stefan, Dipl.-Ing., 58708 Menden (DE); Lipkowski, Marc, Dipl.-Ing., 58640 Iserlohn (DE); Lapp, Oliver, Dipl.-Ing., 42399 Wuppertal (DE); Kittler, Lars, Dipl.-Ing., 58239 Schwerte (DE); Matthies, Jürgen, Dipl.-Ing., 58300 Wetter (Ruhr) (DE); Hoffmann, Wolfgang, Dr.-Ing., 58097 Hagen (DE); Schulte, Wolfgang, Dipl.-Ing., 58339 Breckerfeld (DE)
(74) Vertreter: Sturm, Christoph

(56) Entgegenhaltungen:
- EP-A- 1 094 696
- EP-A- 1 675 220
- DE-A1-102006 024 681
- DE-U1- 9 012 222

## Beschreibung

Die Erfindung betrifft einen Hauptverteiler-Stecker gemäß dem Oberbegriff des Patentanspruchs 1.

Aus dem Produktkatalog "Anschluss- und Verteilersysteme, Ausgabe 1, Seiten 32 bis 33, Jahr 2000, Coming Cable Systems GmbH & Co. KG" ist ein Haupt-verteiler-Stecker, der als HVt-Stecker bezeichnet wird, bekannt. Mit einem solchen Hauptverteiler-Stecker können Kabeladern eines Telekommunikationskabels schnell und einfach an Funktionselemente einer Hauptverteilereinrichtung angeschlossen werden, wobei der aus dem Stand der Technik bekannte Hauptverteiler-Stecker auf einer sogenannten Krimpverbindungstechnik basiert. Die Kabeladern des Telekommunikationskabels müssen über ein spezielles Anlegewerkzeug mit dem auf der Krimpverbindungstechnik basierenden Hauptverteiler-Stecker elektrisch leitend kontaktiert werden. Dies ist aufwendig. Es besteht daher Bedarf an einem neuartigen Hauptverteiler-Stecker, an den die Kabeladern eines Telekommunikationskabels mit geringerem Aufwand angeschlossen werden können.

Ein Hauptverteiler-Stecker mit den Merkmalen gemäß dem Oberbegriff des Patentanspruchs 1 ist aus der DE 90 12 222 U1 bekannt. Dieser Hauptverteiler-Stecker behindert jedoch in einem in einen Hauptverteilereinrichtung eingesteckten Zustand den Zugang zu Funktionselementen der Hauptverteilereinrichtung.

Hiervon ausgehend liegt der vorliegenden Erfindung das Problem zu Grunde, einen neuartigen Hauptverteiler-Stecker zu schaffen.

Dieses Problem wird dadurch gelöst, dass der eingangs genannte Hauptverteiler-Stecker durch die Merkmale des kennzeichnenden Teils des Patentanspruchs 1 weitergebildet ist.

Beim erfindungemäßen Hauptverteiler-Stecker sind die beiden Kontaktierungsabschnitte des Funktionselementkontaktierungsteils an um in etwa 90° zueinander versetzten Rändern einer Platine des Funktionselementkontaktierungsteils ausgebildet.

Dem Funktionselementkontaktierungsteil des Hauptverteiler-Steckers können Überspannungsschutzeinrichtungen und/oder Überstrornschutzeinrichtungen und/oder xDSL-Splittereinrichtungen zugeordnet sein, wobei dann der Hauptverteiler-Stecker nicht nur dem Anschließen von Kabeladern an die Funktions-elemente einer Hauptverteilereinrichtung sondern vielmehr auch der Bereitstellung einer Überspannungsschutzfunktion und/oder einer Überstromschutzfunktion und/oder einer Splitterfunktion dient.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, anhand der Zeichnung näher erläutert. In der Zeichnung zeigt:
- Fig. 1:: einen erfindungsgemäßen Hauptverteiler-Stecker in perspektivischer Vorderansicht,
- Fig. 2:: den Hauptverteiler-Stecker der Fig. 1 in Explosionsdarstellung,

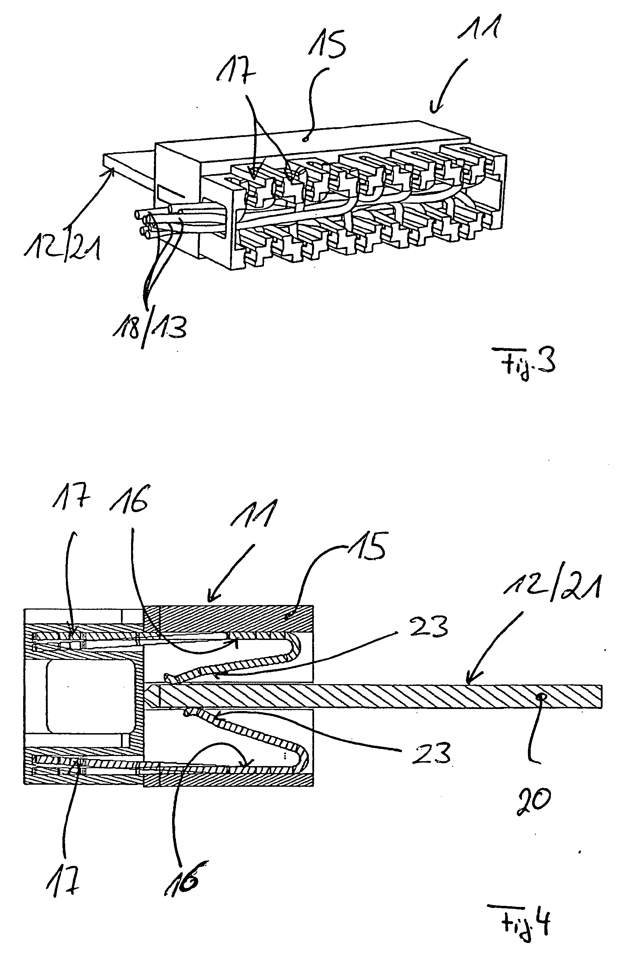

- Fig. 3:: ein Kabelkontaktierungsteil des Hauptverteiler-Steckers der Fig. 1, und
- Fig. 4:: einen Querschnitt durch den Hauptverteiler-Stecker der Fig. 1.

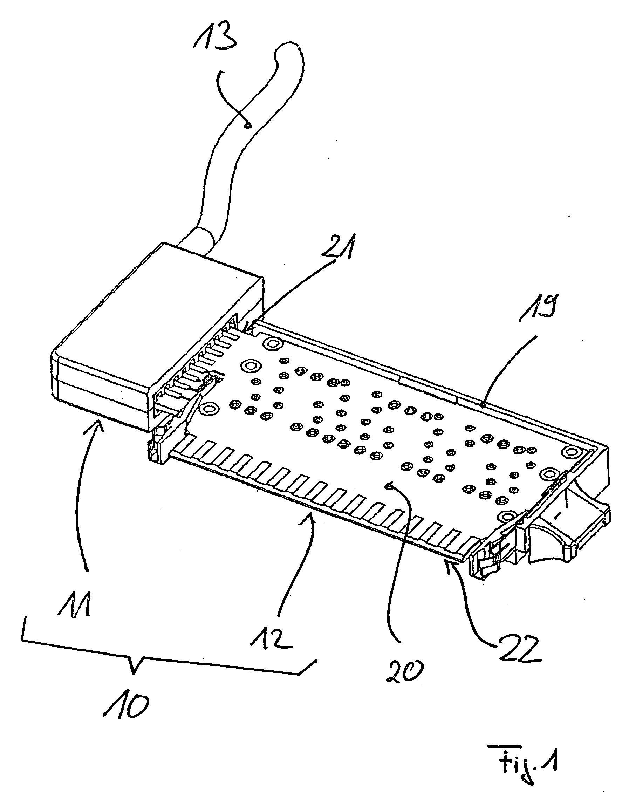

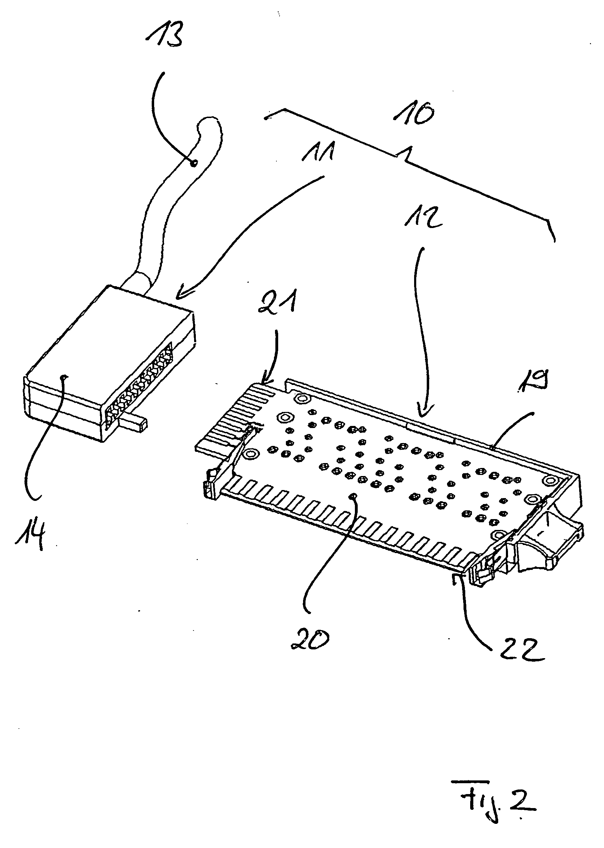

Fig. 1 und 2 zeigen eine schematisierte Darstellung eines erfindungsgemäßen Hauptverteiler-Steckers 10, der aus einem Kabelkontaktierungsteil 11 und einem Funktionselementkontaktierungsteil 12 gebildet ist. An das Kabelkontaktierungsteil 11 des Hauptverteiler-Steckers 10 sind Kabeladern eines Telekommunikationskabels 13 elektrisch leitend anschließbar.

Das Kabelkontaktierungsteil 11 ist mit dem Funktionselementkontaktierungsteil 12 im Sinne einer Buchse-Stecker-Verbindung insbesondere lösbar elektrisch leitend kontaktierbar. Das Funktionselementkontaktierungsteil 12 des Hauptverteiler-Steckers 10 dient der insbesondere lösbaren elektrisch leitenden Kontaktierung desselben mit nicht-dargestellten Funktionselementen einer Hauptverteilereinrichtung, nämlich mit Kontaktfedern der Funktionselemente der Hauptverteilereinrichtung.

Das Kabelkontaktierungsteil 11 des Hauptverteiler-Steckers 10 verfügt über ein Gehäuse 14, wobei das Gehäuse 14 eine Aufnahme 15 für Kontaktfedern 16 des Kabelkontaktierungsteils 11 aufnimmt. Die Kontaktfedern 16 des Kabelkontaktierungsteils 11 bilden an einem Ende IDC-Anschlüsse 17 aus, an die Kabeladern 18 des Telekommunikationskabels 13 einfach und sicher elektrisch leitend angeschlossen werden können.

Jede Kontaktfeder 16 des Kabelkontaktierungsteils 11 des Hauptverteiler-Steckers 10 ist gegenüber den anderen Kontaktfedern 16 des Kabelkontaktierungsteils 11 elektrisch isoliert. Mit einem dem jeweiligen IDC-Anschluss 17 gegenüberliegenden Ende 18 kann jede Kontaktfeder 16 des Kabelkontaktierungsteils 11 mit jeweils einer Leiterbahn, die einer Oberseite oder Unterseite des Funktionselementkontaktierungsteils 12 zugeordnet ist, elektrisch leitend kontaktiert werden.

Die Kontaktfedern 16 des Kabelkontaktierungsteils 11 sind in Form von zwei übereinander positionierten Reihen aus jeweils mehreren Kontaktfedern angeordnet, wobei die in einer ersten Reihe positionierten Kontaktfedern 16 des Kabelkontaktierungsteils 11 mit einer Oberseite des Funktionselementkontaktierungsteils 12 zugeordneten Leiterbahnen und die in einer zweiten Reihe positionierten Kontaktfedern 16 des Kabelkontaktierungsteils 11 mit einer Unterseite des Funktionselementkontaktierungsteils 12 zugeordneten Leiterbahnen elektrisch leitend kontaktierbar sind, nämlich dann, wenn gemäß Fig. 1 das Funktionselementkontaktierungsteil 12 mit dem Kabelkontaktierungsteil 11 des Hauptverteiler-Steckers 10 zusammengesteckt ist.

Dann, wenn das Funktionselementkontaktierungsteil 12 nicht mit dem Kabelkontaktierungsteil 11 des Hauptverteiler-Steckers 10 zusammengesteckt ist, besteht kein elektrisch leitender Kontakt zwischen benachbarten bzw. gegenüberliegenden Kontaktfedern 16 des Kabelkontaktierungsteils 11.

Das Funktionselementkontaktierungsteil 12 des Hauptverteiler-Steckers 10 verfügt über ein rahmenartiges Gehäuse 19, welches eine Platine 20 des Funktionselementkontaktierungsteils 12 an zwei Seiten umschließt. An den beiden Seiten, an denen die Platine 20 des Funktionselementkontaktierungsteils 12 nicht vom Gehäuse 19 umschlossen ist, verfügt das Funktionselementkontaktierungsteil 20 über zwei Kontaktierungsabschnitte.

Bei diesen Kontaktierungsabschnitten handelt es sich um einen ersten Kontaktierungsabschnitt 21 zur elektrisch leitenden Kontaktierung der Leiterbahnen des Funktionselementkontaktierungsteils 12 mit den Kontaktfedern 16 des Kabelkontaktierungsteils 11 und einen zweiten Kontaktierungsabschnitt 22 zur elektrisch leitenden Kontaktierung der Leiterbahnen des Funktionselementkontaktierungsteils 12 mit den Funktionselementen der Hauptverteilereinrichtung, nämlich den Kontaktfedern der Funktionselemente der Hauptverteilereinrichtung.

Die beiden Kontaktierungsabschnitte 21 und 22 sind gemäß Fig. 2 an um in etwa 90° zueinander versetzten Rändern der Platine 20 des Funktionselementkontaktierungsteils 12 ausgebildet.

Auf der Platine 20 des Funktionselementkontaktierungsteils 12 des Hauptverteiler-Steckers 10 können elektrische bzw. elektronische Baugruppen zur Bereitstellung einer Überstromschutzfunktion und/oder Überspannungsschutzfunktion und/oder xDSL-Splitterfunktion angeordnet sein, die in den elektrischen Leitungsweg bzw. die Leiterbahnen zwischen dem ersten Kontaktierungsabschnitt 21 und dem zweiten Kontaktierungsabschnitt 22 geschaltet sind. In diesem Fall dient der erfindungsgemäße Hauptverteiler-Stecker nicht nur der einfachen und schnellen Kontaktierung der Kabeladern eines Telekommunikationskabels mit den Funktionselementen des Hauptverteilers sondern vielmehr weiterhin der Bereitstellung einer Schutzfunktion und/oder Splitterfunktion.

Im Unterschied zum gezeigten Ausführungsbeispiel ist es auch möglich, dass das Kabelkontaktierungsteil 11 des Hauptverteiler-Steckers unlösbar mit dem Funktionselementkontaktierungsteil 12 des Hauptverteiler-Steckers elektrisch leitend und das Funktionselementkontaktierungsteil 12 des Hauptverteiler-Steckers unlösbar mit Funktionselementen der Hauptverteilereinrichtung elektrisch leitend kontaktierbar ist.

### Bezugszeichenliste

- 10: Hauptverteiler-Stecker
- 11: Kabelkontaktierungsteil
- 12: Funktionselementkontaktierungsteil
- 13: Telekommunikationskabel
- 14: Gehäuse
- 15: Aufnahme
- 16: Kontaktfeder
- 17: IDC-Anschluss
- 18: Kabelader
- 19: Gehäuse
- 20: Platine
- 21: Kontaktierungsabschnitt
- 22: Kontaktierungsabschnitt
- 23: Ende

## Patentansprüche

1. Hauptverteiler-Stecker zur elektrisch leitenden Kontaktierung von Kabeladern eines Telekommunikationskabels mit Funktionselementen einer Hauptverteilereinrichtung, mit einem Kabelkontaktierungsteil (11) und einem Funküonselementkontaktierungsteil (12), wobei an das Kabelkontaktierungsteil (11) des Hauptverteiler-Steckers Kabeladern (18) eines Telekommunikationskabels (13) elektrisch leitend anschließbar sind, wobei das Kabelkontaktierungsteil (11) des Hauptverteiler-Steckers mit dem Funktionselementkontaktierungsteil (12) des Hauptverteiler-Steckers elektrisch leitend kontaktierbar ist, wobei das Funktionselementkontaktierungsteil (12) des Hauptverteiler-Steckers mit Funktionselementen einer Hauptverteilereinrichtung elektrisch leitend kontaktierbar ist, und wobei das Funktionselementkontaktierungsteil (12) des Hauptverteiler-Steckers zwei Kontaktierungsabschnitte aufweist, nämlich einen ersten Kontaktierungsabschnitt (21) zur elektrisch leitenden Kontaktierung von Leiterbahnen desselben mit Kontaktfedern (16) des Kabelkontaktierungsteils (11) und einen zweiten Kontaktierungsabschnitt (22) zur elektrisch leitenden Kontaktierung von Leiterbahnen desselben mit den Funktionselementen der Hauptverteilereinrichtung, **dadurch gekennzeichnet, dass** die beiden Kontaktierungsabschnitte (21, 22) an um in etwa 90° zueinander versetzten Rändern einer Platine (20) des Funktionselementkontaktierungsteils (12) ausgebildet sind.

2. Hauptverteiler-Stecker nach Anspruch 1, **dadurch gekennzeichnet, dass** das Kabelkontaktierungsteil (11) des Hauptverteiler-Steckers mehrere Kontaktfedern (16) mit IDC-Anschlüssen (17) für den elektrisch leitenden Anschluss der Kabeladern (18) des Telekommunikationskabels (13) an die Kontaktfedern (16) des Kabelkontaktierungsteils (11) aufweist.

3. Hauptverteiler-Stecker nach Anspruch 2, **dadurch gekennzeichnet, dass** jede Kontaktfeder (16) des Kabelkontaktierungsteils (11) des Hauptverteiler-Steckers gegenüber den anderen Kontaktfedern (16) desselben elektrisch isoliert ist, wobei jede Kontaktfeder (16) des Kabelkontaktierungsteils (11) mit einem dem jeweiligen IDC-Anschluss (17) gegenüberliegenden Ende (23) mit jeweils einer Leiterbahn, die einer Oberseite oder einer Unterseite des Funktionselementkontaktierungsteils (12) zugeordnet ist, elektrisch leitend kontaktierbar ist.

4. Hauptverteiler-Stecker nach Anspruch 2 oder 3, **dadurch gekennzeichnet, dass** die Kontaktfedern (16) des Kabelkontaktierungsteils (11) des Hauptverteiler-Steckers in zwei übereinander positionierten Reihen aus jeweils mehreren Kontaktfedern positioniert sind, wobei die in einer ersten Reihe positionierten Kontaktfedern des Kabelkontaktierungsteils mit einer Oberseite des Funktionselementkontaktierungsteils (12) zugeordneten Leiterbahnen und die in einer zweiten Reihe positionierten Kontaktfedern des Kabelkontaktierungsteils mit einer Unterseite des Funktionselementkontaktierungsteils (12) zugeordneten Leiterbahnen elektrisch leitend kontaktierbar sind.

5. Hauptverteiler-Stecker nach Anspruch 4, **dadurch gekennzeichnet, dass** dann, wenn das Funktionselementkontaktierungsteil (12) nicht mit dem Kabelkontaktierungsteil (11) des Hauptverteiler-Steckers (10) kontaktiert ist, kein elektrisch leitender Kontakt zwischen benachbarten bzw. gegenüberliegenden Kontaktfedern (16) des Kabelkontaktierungsteils (11) besteht.

## Claims

1. Main distribution frame plug for electrically conductive contact to be made with cable cores of a telecommunications cable by functional elements of a main distribution frame device, having a cable contact-making part (11) and a functional element contact-making part (12), wherein cable cores (18) of a telecommunications cable (13) can be electrically conductively connected to the cable contact-making part (11) of the main distribution frame plug, wherein the functional element contact-making part (12) of the main distribution frame plug can make electrically conductive contact with the cable contact-making part (11) of the main distribution frame plug, wherein functional elements of a main distribution frame device can make electrically conductive contact with the functional element contact-making part (12) of the main distribution frame plug, and wherein the functional element contact-making part (12) of the main distribution frame plug has two contact-making sections, specifically a first contact-making section (21) for electrically conductive contact to be made with conductor tracks of the said functional element contact-making part by contact springs (16) of the cable contact-making part (11), and a second contact-making section (22) for electrically conductive contact to be made with conductor tracks of the said functional element contact-making part by the functional elements of the main distribution frame device, **characterized in that** the two contact-making sections (21, 22) are formed on edges of a printed circuit board (20) of the functional element contact-making part (12) which are offset through approximately 90° in relation to one another.

2. Main distribution frame plug according to Claim 1, **characterized in that** the cable contact-making part (11) of the main distribution frame plug has a plurality of contact springs (16) with IDC connections (17) for electrically conductively connecting the cable cores (18) of the telecommunications cable (13) to the contact springs (16) of the cable contact-making part (11).

3. Main distribution frame plug according to Claim 2, **characterized in that** each contact spring (16) of the cable contact-making part (11) of the main distribution frame plug is electrically insulated from the other contact springs (16) of said cable contact-making part, wherein a respective conductor track, which is associated with an upper face or a lower face of the functional element contact-making part (12), can make electrically conductive contact with each contact spring (16) of the cable contact-making part (11) at an end (23) which is situated opposite the respective IDC connection (17).

4. Main distribution frame plug according to Claim 2 or 3, **characterized in that** the contact springs (16) of the cable contact-making part (11) of the main distribution frame plug are positioned in two rows which are positioned one above the other and which each comprise a plurality of contact springs, wherein conductor tracks which are associated with an upper face of the functional element contact-making part (12) can make electrically conductive contact with the contact springs of the cable contact-making part which are positioned in a first row, and conductor tracks which are associated with a lower face of the functional element contact-making part (12) can make electrically conductive contact with the contact springs of the cable contact-making part which are positioned in a second row.

5. Main distribution frame plug according to Claim 4, **characterized in that**, when the cable contact-making part (11) of the main distribution frame plug (10) does not make contact with the functional element contact-making part (12), there is no electrically conductive contact between adjacent or opposite contact springs (16) of the cable contact-making part (11).

## Revendications

1. Fiche de répartiteur principal destinée à mettre en contact électriquement conducteur des fils de câble d'un câble de télécommunication avec des éléments fonctionnels d'un dispositif répartiteur principal, comprenant une partie de mise en contact de câble (11) et une partie de mise en contact d'élément fonctionnel (12), les fils de câble (18) d'un câble de télécommunication (13) pouvant être raccordés de manière électriquement conductrice à la partie de mise en contact de câble (11) de la fiche de répartiteur principal, la partie de mise en contact de câble (11) de la fiche de répartiteur principal pouvant être mise en contact électriquement conducteur avec la partie de mise en contact d'élément fonctionnel (12) de la fiche de répartiteur principal, la partie de mise en contact d'élément fonctionnel (12) de la fiche de répartiteur principal pouvant être mise en contact électriquement conducteur avec les éléments fonctionnels d'un dispositif répartiteur principal, et la partie de mise en contact d'élément fonctionnel (12) de la fiche de répartiteur principal présentant deux portions de mise en contact, à savoir une première portion de mise en contact (21) destinée à la mise en contact électriquement conductrice de pistes conductrices de celle-ci avec des languettes de contact (16) de la partie de mise en contact de câble (11) et une deuxième portion de mise en contact (22) destinée à la mise en contact électriquement conductrice de pistes conductrices de celle-ci avec les éléments fonctionnels du dispositif répartiteur principal, **caractérisée en ce que** les deux portions de mise en contact (21, 22) sont formées sur les bords décalés d'environ 90° l'un par rapport à l'autre d'une platine (20) de la partie de mise en contact d'élément fonctionnel (12).

2. Fiche de répartiteur principal selon la revendication 1, **caractérisée en ce que** la partie de mise en contact de câble (11) de la fiche de répartiteur principal présente plusieurs languettes de contact (16) munies de bornes autodénudantes (17) pour le raccordement électriquement conducteur des fils de câble (18) du câble de télécommunication (13) aux languettes de contact (16) de la partie de mise en contact de câble (11).

3. Fiche de répartiteur principal selon la revendication 2, **caractérisée en ce que** chaque languette de contact (16) de la partie de mise en contact de câble (11) de la fiche de répartiteur principal est isolée électriquement par rapport aux autres languettes de contact (16) de celle-ci, chaque languette de contact (16) de la partie de mise en contact de câble (11) pouvant être mise en contact électriquement conducteur par une extrémité (23) opposée à la borne autodénudante (17) correspondante avec à chaque fois une piste conductrice, laquelle est affectée à un côté supérieur ou à un côté inférieur de la partie de mise en contact d'élément fonctionnel (12).

4. Fiche de répartiteur principal selon la revendication 2 ou 3, **caractérisée en ce que** les languettes de contact (16) de la partie de mise en contact de câble (11) de la fiche de répartiteur principal sont disposées en deux rangées positionnées l'une au-dessus de l'autre composées respectivement de plusieurs languettes de contact, les languettes de contact de la partie de mise en contact de câble qui sont disposées dans une première rangée pouvant être mises en contact électriquement conducteur avec les pistes conductrices affectées à un côté supérieur de la partie de mise en contact d'élément fonctionnel (12) et les languettes de contact de la partie de mise en contact de câble qui sont disposées dans une deuxième rangée pouvant être mises en contact électriquement conducteur avec les pistes conductrices affectées à un côté inférieur de la partie de mise en contact d'élément fonctionnel (12).

5. Fiche de répartiteur principal selon la revendication 4, **caractérisée en ce que**, lorsque la partie de mise en contact d'élément fonctionnel (12) n'est pas mise en contact avec la partie de mise en contact de câble (11) de la fiche de répartiteur principal (10), il n'existe aucun contact électriquement conducteur entre les languettes de contact (16) voisines ou opposées de la partie de mise en contact de câble (11).
